Europäisches Patentamt

European Patent Office

Office européen des brevets

(19)

(11) Numéro de publication: **0 001 368**
**B1**

(12)
# FASCICULE DE BREVET EUROPEEN

(45) Date de publication du fascicule de brevet: **09.12.81**  (51) Int. Cl.³: **C 01 B 33/32**

(21) Numéro de dépôt: **78400107.5**

(22) Date de dépôt: **22.09.78**

(54) **Procédé de granulation de métasilicate de sodium et produits obtenus.**

(30) Priorité: **27.09.77 FR 7729001**

(43) Date de publication de la demande:
**04.04.79 Bulletin 79/7**

(45) Mention de la délivrance du brevet:
**09.12.81 Bulletin 81/49**

(84) Etats Contractants Désignés:
**BE DE FR GB LU NL SE**

(56) Documents cités:
**FR - A - 2 075 966**
**FR - A - 2 143 306**
**GB - A - 8 752 AD 1915**
**US - A - 3 208 822**
**US - A - 3 340 018**
**US - A - 3 377 134**

(73) Titulaire: **RHONE-POULENC INDUSTRIES**
**22, avenue Montaigne**
**F-75008 Paris (FR)**

(72) Inventeur: **Vrisakis, Georges**
**14, rue Galliéni**
**F-69660 Collonges-au-Mont-D'Or (FR)**
Inventeur: **Chastel, Jacques**
**11, rue Vigné**
**F-76130 Mont-Saint-Aignan (FR)**

(74) Mandataire: **Martin, Henri et al,**
**RHONE-POULENC Service Brevets Chimie B.P.**
**753**
**F-75360 Paris Cedex 08 (FR)**

Courier Press, Leamington Spa, England.

# 0 001 368

Procédé de granulation de métasilicate de sodium et produits obtenus.

La présente invention a pour objet un procédé de granulation du métasilicate de sodium.

Elle vise notamment l'obtention d'un métasilicate de sodium de distribution granulométrique étroite et de bonne résistance à l'attrition.

Mais elle vise aussi un métasilicate de sodium stable au stockage et n'ayant aucune réaction vis-à-vis des parfums ni vis-à-vis des non-ioniques. Elle a notamment pour objet un métasilicate présentant de l'eau sur le produit fini, principalement sous forme de métasilicate pentahydraté.

La solution à ce problème se heurte à une double exigence celle qui consiste à obtenir une bonne résistance à l'attrition et celle qui consiste à granuler une poudre de métasilicate anhydre en utilisant peu de liant.

Or, les réponses à cette double exigence sont contradictoires. En effet, si l'on veut une bonne résistance à l'attrition, il faut employer une grande quantité de liant, difficilement compatible avec l'utilisation d'une grande quantité de métasilicate pulvérulent.

Il a été proposé depuis longtemps des procédés de fabrication de granulés de substances quelconques, solides aux températures ordinaires, solubles dans l'eau.

Un de ces procédés consiste à projeter une solution liquéfiée par la chaleur sous forme de gouttelettes au moyen d'un dispositif de pulvérisation à travers une tour contenant un gaz de séchage et de refroidissement. Ce procédé est appelé globulage ou "prilling". Ce procédé présente cependant l'inconvénient d'une mise en oeuvre difficile en raison de difficultés technologiques. En effet, la prise en masse exige un temps de séjour long, donc des appareillages de grande dimension.

Dans le brevet français 1 100 817, l'on a proposé de pulvériser une bouille sous pression dans un four rotatif, à courants parallèles, chauffés, par un courant de gaz chauds pourvus de moyens d'avancement des produits, tels qu'ailettes.

Dans le brevet français 1 351 668 et le brevet US. 3 208 822, l'on a décrit un procédé d'enrobage sous forme de pelures d'oignon selon lequel les opérations de granulation et de séchage ont également lieu sensiblement simultanément.

Selon ce procédé, l'on introduit des particules de métasilicate dans une zone d'enrobage à une température supérieure à 130°C afin de former un lit mouvant de particules cristallisées, puis on pulvérise une solution de métasilicate de sodium anhydre de manière à provoquer la formation d'une couche d'enrobage de métasilicate et on chauffe pour éliminer l'eau. Il suffit ensuite de répéter cette opération le nombre de fois jugé nécessaire pour obtenir le produit désiré.

Dans l'un ou l'autre cas, l'on utilise comme dispositif un four tournant muni d'aubes de relevage afin de provoquer la formation d'un certain nombre de rideaux de matière et de pouvoir mettre en oeuvre le procédé.

Dans la demande de brevet FR 2 075 966 on a décrit un procédé de traitement de particules de métasilicate anhydre renfermant jusqu'à 3% d'eau par une liqueur aqueuse de métasilicate de sodium dans un lit fluide apparemment vertical par un fluide gazeux chaud avant de les conduire dans une zone de criblage et de les refroidir.

On cherche dans ce procédé à obtenir un métasilicate anhydre donc à éviter sa transformation en métasilicate hydraté, et notamment penta hydraté.

Par ailleurs dans cette demande le traitement n'a pas lieu en deux zones avec une cristallisation du métasilicate anhydre dans la première et une cristallisation de l'eau sous forme de métasilicate penta hydraté dans la seconde.

Mais maintenant, on a trouvé, et c'est ce qui fait l'objet de la présente invention, un noveau procédé de fabrication de granulés de métasilicate de sodium renfermant de 2 à 6% d'eau dont une partie au moins sous forme de métasilicate penta hydraté selon lequel dans une première zone dite de cristallisation du métasilicate de sodium anhydre, on introduit du métasilicate anhydre et une liqueur de métasilicate, on effectue la mise en contact des phases solide et liquide par pulvérisation de la phase liquide dans une masse pulvérulente agitée de particules constituant la phase solide, on soumet ladite zone à l'action thermique de gaz chauds, caractérisé par le fait que la température d'entrée desdits gaz dans le première zone est inférieure à la température provoquant l'effet flash des particules de métasilicate et la température de sortie comprise entre 50 et 130°C, de sorte à former des granulés de cohérence suffisante tout en laissant subsister dans lesdits granulés environ 1 à 8% de teneur en eau; et en ce que dans la seconde zone, dite de maturation, on soumet les granulés obtenus à un traitement thermique dans une enceinte agitée dont la température moyenne est comprise entre 42 et 65°C de manière à provoquer au moins partiellement la transformation du métasilicate anhydre en métasilicate penta hydraté.

La température des gaz chauds à l'entrée de la première zone est inférieure à la température provoquant l'effet flash, de sorte à permettre le mouillage des particules et la formation d'agglomérats.

Par effet flash on entend un effet qui correspond à une vitesse de séchage du produit, supérieure à sa vitesse de mouillage.

Mais cette température doit être suffisante pour permettre un bon séchage. De manière avantageuse, elle est comprise entre 200 et 500°C. De préférence, ces gaz doivent être sensiblement

**0 001 368**

exempts de gaz carbonique. Comme mentionné précédemment la température des gaz à la sortie est comprise entre 50 et 130°C.

La température moyenne dans la ou les zones de maturation doit être inférieure à la température de fusion du métasilicate pentahydraté, soit 72°C et supérieure au point de fusion du méta $9H_2O$ soit 42°C. De manière pratique, cette température doit être inférieure à 65°C pour éviter les risques de collage. Par conséquent, la température sera choisie entre 42 et 65°C.

Le temps de séjour dans cette zone de maturation à cette température est de préférence compris entre 5 et 30 mn.

La phase liquide à l'entrée dans la première zone est, comme déjà dit, constituée par une liqueur de métasilicate obtenue par exemple par dissolution de métasilicate anhydre dans l'eau, ou par traitement d'une solution d'un silicate de rapport molaire $SiO_2/Na_2O$ plus élevé, par de la soude caustique.

Contrairement à ce qui est habituellement pratiqué dans l'état de la technique, selon le procédé de l'invention, le rapport en poids entre l'extrait sec de la liqueur de métasilicate de sodium et la quantité de métasilicate introduit dans la première zone sous forme de produit sec non granulé peut être abaissé jusqu'à des valeurs de l'ordre de 20 à 25/100 en parties en poids tout en conservant une bonne résistance à l'attrition.

L'on doit noter que dans le première zone, il y a cristallisation du métasilicate de sodium anhydre, alors que dans la deuxième zone, il y a cristallisation de l'eau sous forme d'hydrates de métasilicate de sodium, en fait du pentahydrate.

Enfin, selon une forme particulièrement avantageuse de mise en oeuvre de l'invention, on recycle une partie du produit issu de la dernière zone de mûrissement à l'entrée de la première zone.

Un des effets les plus importants de ce recyclage a pour effet de permettre une marche stable du procédé.

On sait en effet que la granulométrie à la sortie dépend entre autre de la granulométrie du métasilicate anhydre à l'entrée. Or, d'un point de vue pratique, il est bien difficile de se procurer un métasilicate anhydre de granulométrie suffisamment régulière.

Or, on s'est aperçu que si dans le procédé selon l'invention on recyclait une partie du produit d'aval en amont de la première zone, l'on pouvait compenser au moins en partie ces écarts de granulométrie à l'entrée du système. Par produit en aval, on entend le produit résultant du tamisage et broyage de métasilicate sortant de la seconde zone.

Avantageusement, le taux de recyclage est compris entre 20 et 80. De préférence, il est de l'ordre de 40/60, le premier chiffre indiquant la quantité en poids de produit recyclé, le second la quantité de produit final.

Selon une forme particulière de mise en oeuvre, la température de sortie des gaz de la première zone est comprise entre 50 et 70°C, de manière à pouvoir fixer une quantité d'eau plus importante de l'ordre de 6 à 3%.

Selon une autre variante de mise en oeuvre l'on peut faire subir au métasilicate sortant de la première zone un traitement supplémentaire dans la zone de maturation, on peut notamment pulvériser un stabilisant ou autre additif, tel qu'acide citrique, composé phosphorique, composé gluconique.

Le procédé selon la présente invention peut être mise en oeuvre par des dispositifs en soi connus.

On peut par exemple, pour la première phase faire appel à tout moyen donnant une masse pulvérulente en mouvement d'amont en aval et en mouvement ou en équilibre de bas en haut, suffisamment dispersée dans laquelle on forme un nuage de pulvérisation.

Pratiquement, on peut utiliser un tambour rotatif muni d'aubes provoquant la formation d'un rideau de particules occupant la majeure partie du volume dudit tambour, dans lequel on pulvérise la phase liquide au moyen d'au moins un injecteur.

Selon une autre forme de réalisation de la présente invention, le rideau de particules est essentiellement situé dans la partie amont du tambour de la première zone.

On peut également utiliser un système équivalent constitué par un lit fluidisé pourvu de moyens permettant le déplacement du lit fluide.

La seconde zone est de manière simple constituée par un seul dispositif agité tel que tambour rotatif, lit fluidisé, etc. . .

Le produit selon l'invention se distingue par le fait qu'il renferme de l'eau, de 2 à 6%.

De plus, il présente de préférence une résistance à l'attrition telle que la perte en poids soit inférieure à 10%. Cette résistance à l'attrition est appréciée par détermination de la perte en poids d'un échantillon soumis à l'action de l'azote dans un lit fluidisé, pendant 6 heures, le débit d'azote étant de 425 litres/heure à travers un diaphragme de 0,4 mm de diamètre.

Mais la présente invention sera plus aisément comprise à l'aide des exemples suivants, donnés à titre indicatif mais nullement limitatif.

Dans les exemples ci-après, on fait appel à un dispositif comprenant deux tambours rotatifs 1 et 2.

Le tambour 1 qui correspond à la première zone de traitement est muni d'aubes non représentées permettant de créer un nuage de particules en mouvement d'amont vers l'aval.

Le tambour 2 est un tambour de conception plus simple, comprenant un nombre plus réduit

3

**0 001 368**

d'aubes, sa vitesse périphérique étant plus faible de manière à former un rouleau de produit et non un rideau.

Dans les exemples suivants, les caractéristiques des deux tambours sont les suivantes:

|  | tambour 1 | tambour 2 |
|---|---|---|
| longueur en m | 7,7 | 6 |
| diamètre en m | 2,3 | 2,10 |
| vitesse de rotation | 7 tours/mn | 1 tour/mn |

On pulvérise dans le tambour 1, au moyen d'un injecteur 3 une phase liquide amenée par un conduit 4.

La phase solide est introduite par un conduit 5, lequel peut être raccordé à un conduit 6 permettant le recyclage du produit fini.

Les gaz chauds nécessaires à la mise en oeuvre du procédé sont introduits en 7, à co-courant, et évacués en 8.

Le produit issu du tambour 1 est amené par simple gravimétrie par le conduit 9 dans le tambour 2 oú il est traité à contre-courant par de l'air à température ambiante introduit en 10, et évacué en 11, le produit fini étant recueilli par 12.

Dans les exemples suivants, les conditions opératoires sont les suivantes:

Le métasilicate traité est un produit pulvérulent de refus au tamis 27, de 3% au maximum selon la série AFNOR et commercialisé sous la dénomination SIMET AP et de diamètre moyen égal à 0,15 mm.

Dans tous les exemples, la phase liquide introduite est constituée par 86 kg de métasilicate pour 100 kg d'eau.

Les conditions de traitement sont résumées dans le tableau 1 et les résultats sur le produit fini sont reportés sur le tableau 2 ci-après.

La teneur en eau est appréciée par la mesure de la perte au feu à 600°C, et en plus l'analyse thermique différentielle en ce qui concerne le Méta 5.

La résistance à l'attrition est exprimé selon le test décrit précédemment en pourcentage en poids par rapport au poids initial.

Le point de trouble correspond à la température à laquelle apparaît un trouble d'une solution à 1% d'un mélange à 96 parties en poids du métasilicate pour 4 parties en poids d'un non-ionique constitué dans le présent test par du nonylphénol éthoxylé à 9 oxydes d'éthylène pour une mole de nonylphénol commercialisée par Rhône-Poulenc sous la dénomination Cemulsol NP9.

Le test de poussiérage consiste à mesurer la quantité de poussières retenues électrostatiquement le long des parois d'un flacon en PVC soumis en vibration lors de la chute du produit à l'intérieur du flacon, puis à doser par HCl N/10 la solution de poussières pour un poids d'échantillon de 50 g et est exprimée en cm3 de la solution d'acide.

Enfin, le test de résistance au mottage consiste à déterminer le pourcentage de produit non motté après un séjour de 24 heures sous une humidité relative de 75% à 40°C, puis de 6 heures à une humidité relative de 20% à 40°C.

4

TABLEAU 1

| Exemple | Débit phase liquide tonne/h | Débit poudre T/h | Température entrée gaz en 7 | Température sortie gaz en 8 | Recyclage par rapport au produit fini | Température moyenne | Temps de séjour en 2 en mn |
|---|---|---|---|---|---|---|---|
| 1 | 1,880 | 1,9 | 400 | 110 | 25/75 | 45 | 30 |
| 2 | 1,880 | 1,9 | 400 | 95 | 25/75 | 45 | 30 |
| 3 | 1,61 | 1,620 | 370 | 90 | 35/65 | 50 | 30 |
| 4 | 1,5 | 1,23 | 330 | 60 | 40/60 | 45 | 30 |
| 5 (1) | 1,5 | 1,23 | 330 | 60 | 40/60 | | 0 |
| 6 | 1,88 | 3,1 | 400 | 110 | 15/80 | 45 | 30 |
| 7 (2) | 1,88 | 1,9 | 400 | 110 | 25/75 | 45 | 30 |

(1) Dans l'exemple 5, il n'y a pas de tambour 2

(2) Cet exemple est indentique à 1 sauf que le métasilicate est traité dans le tambour 2 avec 40 % en poids d'une solution à 25 g/100 g d'eau d'une solution de phosphate monosodique.

TABLEAU 2

| Exemple | Teneur en eau | | Résistance à l'attrition en % | Points de trouble | Poussiérage | Mottage % non motté | Granulo-métrie $d_{50}$ | Granulo-métrie $d_{10}-d_{90}$ |
|---|---|---|---|---|---|---|---|---|
| | Total | Méta-5 | | | | | | |
| 1 | 2 | 1 | 9 | 35,1°—39,3° | 1,4 | 50 | 0,67 | 0,40—0,92 |
| 2 | 3 | 2 | 8,5 | 34,7°—37,1° | 1,1 | 65 | 0,80 | 0,47—1,10 |
| 3 | 4 | 3 | 7 | 34,1°—35,5° | 0,8 | 80 | 0,58 | 0,41—0,87 |
| 4 | 5 | 3,1 | 5 | 33,2°—34,2° | 0,4 | 85 | 0,60 | 0,45—0,92 |
| 5 | 5,5 | 0,8 | 10 | 33,8°—35,8° | 1,5 | 70 | 0,73 | 0,40—0,95 |
| 6 | 2 | 1 | 12 | 35,4°—38,5° | 1,8 | 45 | 0,42 | 0,23—0,56 |
| 7 | 4,5 | 4* | 7 | 33,6°—34,1° | 0,7 | 90 | 0,62 | 0,48—0,93 |

\* Sous forme de divers sels hydratés cristallisés.

$d_{50}$ = 50 % de refus

$d_{10}$ = 10 % de refus

$d_{90}$ = 90 % de refus

# 0 001 368

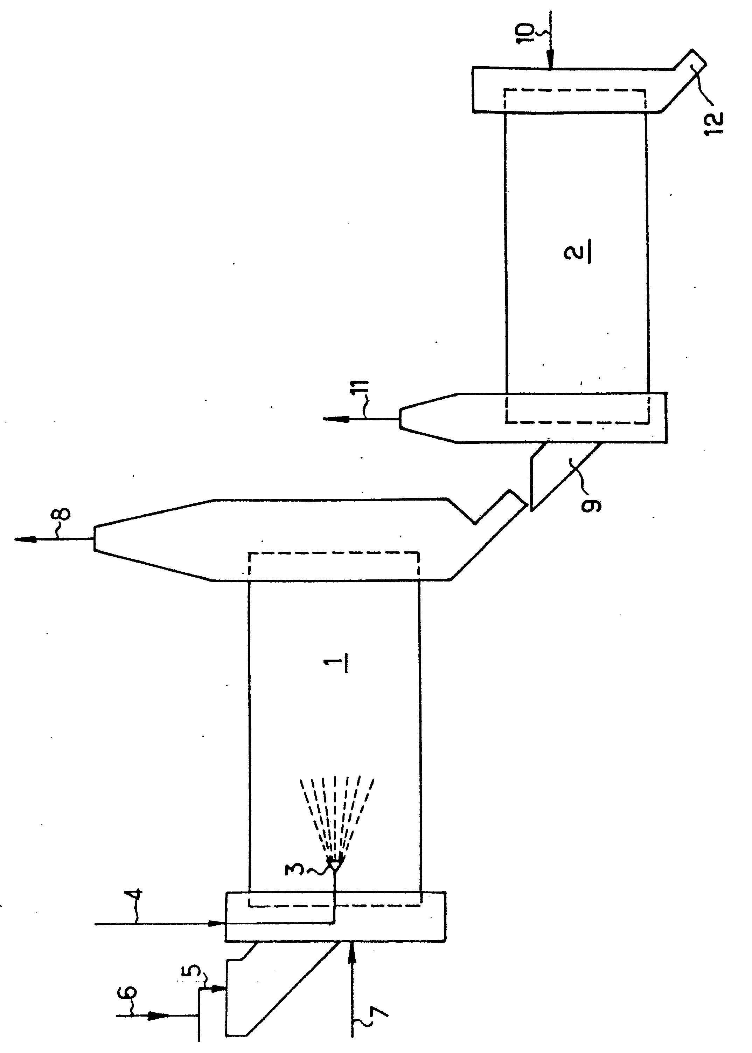

## Revendications

1. Procédé de fabrication de granulés de métasilicate de sodium renfermant de 2 à 6% d'eau dont une partie au moins sous forme de métasilicate penta hydraté selon lequel dans une première zone dite de cristallisation du métasilicate de sodium anhydre, on introduit du métasilicate anhydre et une liqueur de métasilicate, on effectue la mise en contact des phases solide et liquide par pulvérisation de la phase liquide dans une masse pulvérulente agitée de particules constituant la phase solide, on soumet ladite zone à l'action thermique de gaz chauds, caractérisé en ce que la température d'entrée desdits gaz dans la première zone est inférieure à la température provoquant l'effet flash des particules de métasilicate et la température de sortie comprise entre 50 et 130°C, de sorte à former des granulés de cohérence suffisante tout en laissant subsister dans lesdits granulés environ 1 à 8% de teneur en eau; et en ce que dans la seconde zone, dite de maturation, on soumet les granules obtenus à un traitement thermique dans un enceinte agitée dont la température moyenne est comprise entre 42 et 65°C de manière à provoquer au moins partiellement la transformation du métasilicate anhydre en métasilicate pentahydraté.

2. Procédé selon la revendication 1 caractérisé par le fait que la température d'entrée desdits gaz de la première zone est comprise entre 200 et 500°C.

3. Procédé selon l'une des revendications 1 et 2 caractérisé par le fait que le temps de séjour dans la seconde zone est compris entre 5 et 30 minutes.

4. Procédé selon l'une des revendications 1 à 3 caractérisé par le fait que le rapport en poids entre l'extrait sec de la liqueur de métasilicate de sodium et la quantité de métasilicate introduit dans la première zone sous forme de produit sec non granulé est d'au moins

$$\frac{20}{100}$$

5. Procédé selon l'une des revendications 1 à 4, caractérisé par le fait que l'on recycle une partie du métasilicate.

6. Procédé selon l'une des revendications 1 à 5, d'obention d'un métasilicate granulé renfermant 3 à 6% d'eau, caractérisé par le fait que l'on maintient les gaz à la sortie de la première zone à une température comprise entre 50 et 70°C.

7. Procédé selon l'une des revendications 1 à 6, caractérisé par le fait que l'on fait subir au produit traité dans la zone de maturation, un traitement de stabilisation au moyen d'un additif du groupe de l'acide citrique des composés phosphoriques et gluconiques.

## Patentansprüche

1. Verfahren zur Herstellung eines Granulats von Natriummetasilikat mit 2 bis 6% Wasser, von dem wenigstens ein Teil in Form von Metasilikatpentahydrat vorliegt, bei dem man in eine erste Zone, genannt Kristallisation des wasserfreien Natriummetasilikats, wasserfreies Metasilikat und eine Metasilikatlösung einführt, die feste und flüssige Phase durch Zerstäuben der flüssigen Phase in einer bewegten pulverförmigen Masse von Teilchen, die die Feststoffphase bildet, in Kontakt bringt, und die genannte Zone einer thermischen Behandlung mit warmen Gasen aussetzt, dadurch gekennzeichnet, daß die Eintrittstemperatur der genannten Gase in der ersten Zone unterhalb der Temperatur liegt, die die plötzliche Zersetzung der Metasilikatteilchen bewirkt, und daß die Austrittstemperatur zwischen 50 und 130°C liegt, um ein Granulat mit ausreichendem Zusammenhalt zu schaffen, indem man in dem genannten Granulat etwa 1 bis 8% Wassergehalt beläßt und daß man in der zweiten Zone, genannt Reifezone, das erhaltene Granulat einer thermischen Behandlung in einem bewegten Raum unterwirft, dessen mittlere Temperatur zwischen 42 und 65°C liegt, um mindestens teilweise die Umwandlung des wasserfreien Metasilikats in Metasilikatpentahydrat zu bewirken.

2. Verfahren nach Anspruch 1, dadurch gekennzeichnet, daß die Eintrittstemperatur der genannten Gase in der ersten Zone zwischen 200 und 500°C liegt.

3. Verfahren nach einem der Ansprüche 1 und 2, dadurch gekennzeichnet, daß die Verweilzeit in der zweiten Zone zwischen 5 und 30 Minuten beträgt.

4. Verfahren nach einem der Ansprüche 1 bis 3, dadurch gekennzeichnet, daß das Gewichtsverhältnis des trockenen Extrakts der Natriummetasilikatlösung zur Menge des als trockenes, nicht granuliertes Produkt in die erste Zone eingeführten Metasilikats mindestens

$$\frac{20}{100} \text{ beträgt.}$$

5. Verfahren nach einem der Ansprüche 1 bis 4, dadurch gekennzeichnet, daß man einen Teil des Metasilikats wiederverwendet.

**0001368**

6. Verfahren nach einem der Ansprüche 1 bis 5 zur Herstellung eines Metasilikatgranulates mit 3 bis 6% Wasser, dadurch gekennzeichnet, daß man die Gase am Ausgang der ersten Zone auf einer Temperatur zwischen 50 und 70°C hält.

7. Verfahren nach einem der Ansprüche 1 bis 6, dadurch gekennzeichnet, daß man das behandelte Produkt in der Reifezone einer Stabilisierungsbehandlung mit Hilfe eines Zusatzmittels der Gruppe: Zitronensäure, Phosphor- und Glukonsäureverbindungen unterwirft.

**Claims**

1. Process for the manufacture of sodium metasilicate granules containing from 2 to 6% of water, at least part of which is in the form of metasilicate pentahydrate, in accordance with which process anhydrous metasilicate and a metasilicate liquor are introduced into a first zone, referred to as the anhydrous sodium metasilicate crystallisation zone, the solid and liquid phases are brought into contact by spraying the liquid phase into an agitated pulverulent mass of particles constituting the solid phase, and the said zone is subjected to the thermal action of hot gases, characterised in that the temperature at which the said gases enter the first zone is below the temperature which causes the flash effect of the metasilicate particles, and the outlet temperature is between 50 and 130°C, so as to form granules of sufficient cohesion, whilst at the same time allowing a water content of about 1 to 8% to remain in the said granules, and in that, in the second zone, referred to as the ripening zone, the granules obtained are subjected to a heat treatment in an agitated enclosure having an average temperature of between 42 and 65°C, so as to cause at least partial conversion of the anhydrous metasilicate to metasilicate pentahydrate.

2. Process according to Claim 1, characterised in that the temperature at which the said gases enter the first zone is between 200 and 500°C.

3. Process according to one of Claims 1 and 2, characterised in that the residence time in the second zone is between 5 and 30 minutes.

4. Process according to one of Claims 1 to 3, characterised in that the weight ratio of the solids content of the sodium metasilicate liquor to the amount of metasilicate introduced into the first zone in the form of non-granular dry product is at least

$$\frac{20}{100}$$

5. Process according to one of Claims 1 to 4, characterised in that part of the metasilicate is recycled.

6. Process according to one of Claims 1 to 5, for the production of a granular metasilicate containing 3 to 6% of water, characterised in that the gases at the outlet of the first zone are kept at a temperature between 50 and 70°C.

7. Process according to one of Claims 1 to 6, characterised in that the product treated in the ripening zone is subjected to a stabilisation treatment by means of an additive from the group comprising citric acid and phosphoric and gluconic compounds.

6

4

5

3

1

7

1

8

2

9

11

10

12

0001 368